(19) Europäisches Patentamt
European Patent Office
Office européen des brevets

(11) **EP 4 053 553 A1**

(12) **DEMANDE DE BREVET EUROPEEN**

(43) Date de publication:
**07.09.2022 Bulletin 2022/36**

(21) Numéro de dépôt: **22159614.1**

(22) Date de dépôt: **02.03.2022**

(51) Classification Internationale des Brevets (IPC):
**G01N 29/12** (2006.01) **G01H 3/00** (2006.01)
**G01N 29/44** (2006.01) **G01N 29/46** (2006.01)
**B29C 64/386** (2017.01) **B33Y 50/02** (2015.01)
**B29C 64/393** (2017.01) **B22F 10/85** (2021.01)

(52) Classification Coopérative des Brevets (CPC):
**G01N 29/46; B22F 10/85; B33Y 99/00; G01H 1/00; G01H 3/06; G01N 29/12; G01N 29/4427;**
G01N 2291/0234; G01N 2291/0289; G01N 2291/048; G01N 2291/102

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **03.03.2021 FR 2102040**

(71) Demandeur: **Commissariat à l'Energie Atomique et aux Energies Alternatives**
**75015 Paris (FR)**

(72) Inventeurs:
• **GARANDET, Jean-Paul**
  **91191 GIF SUR YVETTE CEDEX (FR)**
• **LE BOURDAIS, Florian**
  **91191 GIF SUR YVETTE CEDEX (FR)**
• **LEYMARIE, Nicolas**
  **91191 GIF SUR YVETTE CEDEX (FR)**

(74) Mandataire: **Nony**
  **11 rue Saint-Georges**
  **75009 Paris (FR)**

(54) **PROCÉDÉ DE DÉTECTION DE FISSURES DANS UNE PIÈCE EN ALLIAGE D'ALUMINIUM RÉALISÉE PAR FABRICATION ADDITIVE**

(57) Procédé de détection de fissures dans une pièce en alliage d'aluminium réalisée par fabrication additive.

L'invention consiste essentiellement en une analyse des spectres de résonance ultrasonore (RUS) acquis sur une pièce en alliage d'aluminium réalisée par fabrication additive. En comparant avec des pièces réalisée dans un même matériau mais sans défauts, les inventeurs ont en effet constaté que les spectres acquis sur des pièces défectueuses présentaient des pics de résonance avec des facteurs de qualité Q significativement plus faibles.

Fig. 9

EP 4 053 553 A1

## Description

### Domaine technique

La présente invention concerne le domaine général du contrôle non destructif (CND) de pièces, notamment celles réalisées par une technique de fabrication additive.

Elle a trait plus particulièrement au contrôle CND de pièces en alliages d'aluminium réalisée par fabrication additive.

Le procédé selon l'invention est particulièrement destiné à être mis en œuvre pour des pièces en alliage d'aluminium fabriquées par technique de fabrication additive mettant en œuvre une fusion préférentiellement complète de la poudre au moyen d'un rayonnement laser ou au moyen d'un faisceau électronique.

### Technique antérieure

La fabrication additive d'alliage aluminium est aujourd'hui à un stade de développement beaucoup moins avancé que d'autres matériaux, tels que les polymères, les alliages de titane ou les bases nickel.

Un des verrous à franchir pour la fabrication additive des alliages d'aluminium est de démontrer que les pièces élaborées peuvent satisfaire à des contraintes techniques élevées, comme par exemple pour satisfaire à une qualification aéronautique ou dans le domaine de l'automobile.

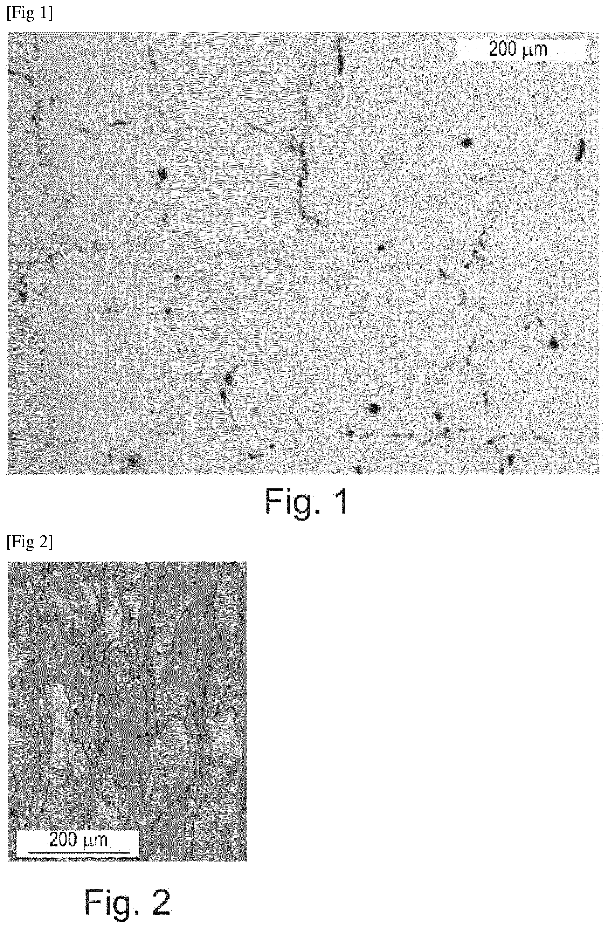

Or, il s'avère que pour certaines séries d'alliages connues de l'homme de l'art pour être difficilement soudables (séries 2xxx, 6xxx et 7xxx notamment), une caractéristique particulière des pièces élaborées par fabrication additive est qu'elles sont susceptibles de comporter de nombreuses fissures/microfissures. Cela est montré sur la figure 1 sur laquelle on peut visualiser la présence de fissures dans un alliage Al 6061 élaboré par fusion sélective par laser (SLM acronyme anglo-saxon pour « Selective Laser Melting »). On précise que la barre d'échelle indiquée sur cette micrographie optique représente une longueur de 200 $\mu$m.

Ces fissures/microfissures réduisent fortement les performances mécaniques des pièces élaborées. A défaut d'être parfaitement compris en termes de mécanismes, ce phénomène de fissures est bien connu de l'homme de l'art, et est associé à la présence conjointe de structures de solidification colonnaires et de contraintes thermomécaniques.

Aussi, pour franchir le verrou évoqué ci-avant, il se pose le problème incontournable de la détection des fissures qui se forment lors de l'élaboration de pièces d'alliages d'aluminium par fabrication additive, en particulier pour les matériaux soumis au phénomène de fissuration à chaud.

La méthode a priori la plus évidente et la plus simple pour mesurer la densité d'une pièce, et en particulier vérifier si elle est ou non fissurée consiste à réaliser une ou plusieurs coupes métallographiques dans la pièce : [1]. Avec un polissage et une attaque chimique appropriées, d'éventuelles fissures sont facilement révélées. Cependant, cette méthode est destructive et locale.

Une autre technique conventionnellement utilisée pour la caractérisation des pièces élaborées par fabrication additive est la mesure de leur densité par mesure de la poussée d'Archimède : [1]. Cette méthode est relativement simple de mise en œuvre, mais elle est relativement peu précise et nécessite un grand nombre de défauts dans les pièces pour fournir des résultats exploitables.

La pycnométrie à l'hélium permet également de mesurer la densité absolue d'une pièce. Cette méthode est probablement plus précise, mais elle est limitée à la caractérisation de pièces de petit volume. De plus, la connaissance de la densité ne permet pas de détecter la présence de fissures internes dans tous les cas.

Une technique plus avancée, dans la mesure où elle permet la localisation des défauts est celle de la tomographie aux rayons X : [1]. Un point intéressant est que, de par leur faible densité, les alliages d'aluminium se prêtent bien à la caractérisation par tomographie X. Cependant, la méthode est mal adaptée à la caractérisation de pièces de grande taille, et nécessite un investissement important pour l'acquisition de la source et du détecteur. Par ailleurs, le temps d'acquisition à la pluralité de vues nécessaires à la reconstruction est long.

Les techniques mettant en œuvre la propagation des ondes ultrasonores (US) permettent également de caractériser la santé matière des pièces et obtenir des informations sur la structure des pièces élaborées par fusion / solidification. Un résultat connu de l'état de l'art est que les ondes US sont diffractées sur les défauts de structure (joints de grains, fissures...) du matériau, ce qui se traduit par des signaux ultrasonores plus bruités que sur les matériaux non défectueux, voire présentant des échos liés à la localisation des défauts.

Une technique particulièrement intéressante est la spectroscopie de résonance ultrasonore (RUS pour « Resonant Ultrasound Sprectroscopy » en terminologie anglo-saxonne). Cette technique RUS est basée sur l'établissement d'ondes stationnaires dans la pièce à tester et sur la mesure d'un certain nombre de fréquences ou pics de résonance de ladite pièce. Utilisée en lien avec une simulation numérique des équations du mouvement, par exemple par la méthode des éléments finis, la technique permet une estimation précise des constantes élastiques des matériaux [2].

Cette technique RUS peut également être utilisée pour la caractérisation des défauts dans la mesure où, comme mentionné ci-dessus, tout défaut de structure va influer sur la propagation des ondes. Plus précisément, sur les pics de résonance, l'influence des défauts peut se traduire par des déplacements, des dédoublements, des élargissements et des variations d'amplitude. Dans des échantillons axisymétriques de géométrie connue, les défauts peuvent même être localisés [2].

La publication [3] adresse le problème de l'effet de fissures localisées de longueur différentes sur le spectre de résonance RUS de plaques de silicium (Si). Plus particulièrement, le traitement est focalisé sur un pic particulier, dénoté A dans la publication, dont on voit qu'il se décale et s'élargit quand la longueur de la fissure augmente. Cependant, cette publication [3] n'adresse pas le problème de l'évaluation de l'état défectueux d'une pièce où peuvent être présents de nombreux défauts microscopiques, par opposition à un défaut macroscopique localisé. Par ailleurs, elle suppose connue avec précision la géométrie de la pièce à tester.

Or, comme déjà évoqué, les pièces en alliages d'aluminium élaborées par fabrication additive peuvent avoir en leur sein de nombreuses microfissures.

Une autre caractéristique de ces pièces est de présenter un très grand nombre de grains cristallographiques, qu'on associe généralement aux conditions extrêmes de solidification (très forts gradients thermiques, vitesse de croissance très rapide) rencontrées dans les procédés de fabrication additive. Concrètement, la largeur de grains observée est très majoritairement inférieure à 30 μm. Cela est illustré à la figure 2, qui une cartographie par diffraction d'électrons rétrodiffusés (acronyme anglo-saxon EBSD pour « Electron Back Scattered Diffraction ») : elle montre la structure de grains dans un alliage Al 6061 élaboré par SLM. On précise que la barre d'échelle indiquée sur cette micrographie optique représente une longueur de 200 μm.

Même dans les échantillons très fissurés comme ceux de la figure 1, du fait de cette structure cristallographique particulière au procédé de fabrication additive, les joints de grains sont beaucoup plus nombreux que les fissures dans les échantillons [4].

Il existe donc un besoin de trouver une solution de détection de fissures/microfissures dans les pièces élaborées par une technique d'alliage en aluminium, qui permette notamment distinguer de manière sûre les fissures/microfissures et de pallier les inconvénients de l'art antérieur précédemment cité.

Le but général de l'invention est alors de répondre au moins en partie à ce besoin.

**Exposé de l'invention**

Pour ce faire, l'invention a tout d'abord pour objet un procédé de détection de fissures dans une pièce en alliage d'aluminium réalisée par une technique de fabrication additive, comprenant les étapes suivantes :

a/ mise en contact d'un émetteur à ultrasons et d'un récepteur à ultrasons avec la pièce ;

b/ émission de signaux de l'émetteur vers le récepteur à travers la pièce ;

c/ mesure de la fonction de transfert de signaux entre émetteur et récepteur ;

d/ à partir de la fonction de transfert mesurée, détermination d'un spectre à au moins un pic de fréquence de résonance ;

e/ détermination du facteur de qualité (Q) pour chaque pic de fréquence de résonance ;

f/ comparaison du facteur de qualité déterminé (Q) ou d'une médiane de facteurs de qualité déterminés avec un facteur de qualité de référence (Qref) correspondant à une pièce en alliage d'aluminium;

g/ si le facteur de qualité déterminé ou la médiane de facteurs de qualité déterminés est supérieur(e) au facteur de qualité de référence (Qref), alors la pièce est estimée dénuée de fissures inacceptables.

Dans l'étape f/, le facteur de qualité de référence (Qref) correspond de préférence à une pièce en alliage d'aluminium réputée de bonne qualité, préférentiellement sans fissures.

Ainsi, l'invention consiste essentiellement en une analyse des spectres de résonance ultrasonore (RUS) acquis sur une pièce en alliage d'aluminium réalisée par fabrication additive. En comparant avec des pièces réalisée dans un même matériau mais sans défauts, les inventeurs ont en effet constaté que les spectres acquis sur des pièces défectueuses présentaient des pics de résonance avec des facteurs de qualité Q significativement plus faibles.

Cette solution est loin d'avoir été évidente à mettre en œuvre puisque comme expliqué en préambule, l'étude cristallographique d'un alliage d'aluminium issu d'une fabrication additive montre clairement que la densité de joints de grains est beaucoup plus importante que la densité de fissures.

Aussi, avec une analyse de signal RUS, on aurait pu s'attendre à ce que l'effet des joints de grains soit largement dominant dans les spectres de résonance.

Or, les inventeurs ont pu contre toute attente constater que dans une analyse de signal RUS le rapport pics/bruit apparaît principalement lié aux fissures et que l'analyse des spectres selon l'invention basée sur la valeur du facteur de qualité d'au moins un des pics du spectre de résonance permet sans ambiguïté l'identification des pièces fissurées indépendamment de la structure des grains dans la pièce analysée.

Contrairement aux publications de l'état de l'art, en particulier [3], le procédé selon l'invention ne s'intéresse pas aux décalage de pics de résonance par rapport à un état de référence sain.

Selon une première alternative avantageuse, l'étape d/ consiste en la détermination du pic de la fréquence de résonance fondamentale de la pièce.

Selon une deuxième alternative avantageuse, l'étape d/ consiste en la détermination d'au moins 10 pics de résonance par un balayage en fréquence.

Avantageusement, le facteur de qualité de référence (Qref) est au moins égal à 800, de préférence au moins égal à 1000.

Avantageusement encore, l'étape d/ est réalisée par un algorithme de seuillage.

Selon une variante avantageuse, l'étape e/ consiste en l'ajustement du au moins un pic au moyen d'une fonction Lorentzienne.

De préférence, l'étape b/ est réitérée de sorte à déterminer au moins deux, préférentiellement au moins trois, encore plus préférentiellement au moins cinq spectres selon l'étape d/. Le fait de faire plusieurs acquisitions (enregistrements) permet de détecter les éventuelles fréquences de résonance manquantes et vérifier que ce nombre de fréquences manquantes est faible.

Selon un mode de réalisation avantageux, le procédé comprend avant l'étape e/, une étape d1/ de fusion des au moins deux spectres déterminés par masquage. Dans le cas où une fréquence manquante a été identifiée, en combinant au moins deux enregistrements et en les fusionnant par masquage.

Au-delà du problème des fréquences manquantes, la procédure d'acquisition multiple et de sommation des enregistrements permet d'améliorer le rapport signal sur bruit des spectres de résonance.

L'invention a également pour objet un système de détection de fissures dans une pièce en alliage d'aluminium réalisée par une technique de fabrication additive, comprenant :

- un émetteur à ultrasons et un récepteur à ultrasons;

- un amplificateur relié au récepteur ;

- un analyseur de spectres relié à la fois à l'émetteur et au récepteur, pour la mesure de la fonction de transfert entre l'émetteur et le récepteur ;

- une unité de traitement électronique reliée à l'analyseur de spectres, l'unité de traitement électronique étant configurée pour mettre en œuvre le procédé tel que décrit précédemment.

L'invention a également pour objet un produit programme d'ordinateur pour la mise en œuvre du procédé de détection mentionné ci-avant.

L'invention a enfin pour objet un procédé de contrôle non destructif (CND) d'une pièce en alliage d'aluminium réalisée par une technique de fabrication additive, comprenant une étape de mesure de la densité de la pièce par une technique de mesure de la poussée d'Archimède avant ou après la réalisation du procédé de détection mentionné ci-avant.

Les avantages de l'invention sont nombreux parmi lesquels on peut citer :

- au moyen d'un contrôle ultrasons non destructif, détection pour estimer de manière fiable si des pièces en alliage d'aluminium élaborées par fabrication additive sont ou non fissurées ;
- procédé rapide et simple à mettre en œuvre ;
- possibilité de mettre en œuvre le procédé directement en sortie d'un procédé de fabrication additive sans préparation préalable ;
- procédé complémentaire avec un autre procédé de contrôle non destructif de pièces, en particulier une technique de mesure de la poussée d'Archimède.

L'invention peut être envisagée pour toutes applications et domaines industriels mettant en œuvre les alliages d'aluminium, notamment dans les secteurs de l'aéronautique et de l'automobile. Plus particulièrement, on peut envisager le contrôle non destructif d'échangeurs réacteurs réalisés en fabrication additive par l'intermédiaire d'un procédé selon l'invention.

D'autres avantages et caractéristiques ressortiront mieux à la lecture de la description détaillée, faite à titre illustratif et non limitatif, en référence aux figures suivantes.

**Brève description des dessins**

[Fig 1] la figure 1 est une micrographie optique montrant la présence de fissures dans un alliage Al 6061 élaboré par SLM.

[Fig 2] la figure 2 est une cartographie par diffraction d'électrons rétrodiffusés EBSD de la structure de grains dans un alliage Al 6061 élaboré par SLM.

[Fig 3] la figure 3 est une vue schématique d'un système pour la mise en œuvre du procédé de détection de fissures selon l'invention.

[Fig 4] la figure 4 est une reproduction photographique d'une partie du montage des capteurs du système selon l'invention sur un échantillon en alliage d'aluminium à analyser.

[Fig 5] la figure 5 une reproduction d'un spectre de pics de résonance obtenu après extraction de pics en fonction des fréquences, grâce au procédé de détection selon l'invention, le spectre obtenu étant superposé à celui de la mesure d'origine.

[Fig 6] la figure 6 est une reproduction des facteurs de qualité des pics selon la figure 5.

[Fig 7] la figure 7 est une reproduction des amplitudes de pics selon la figure 5.

[Fig 8] la figure 8 montre les spectres de deux enregistrements distincts et leur fusion par masquage.

[Fig 9] la figure 9 montre les courbes de distribution de facteurs de qualité pour différents échantillons en alliage d'aluminium analysés par le procédé selon l'invention.

## Description détaillée

Les figures 1 et 2 ont déjà été commentées en préambule et ne le sont donc pas plus ci-après.

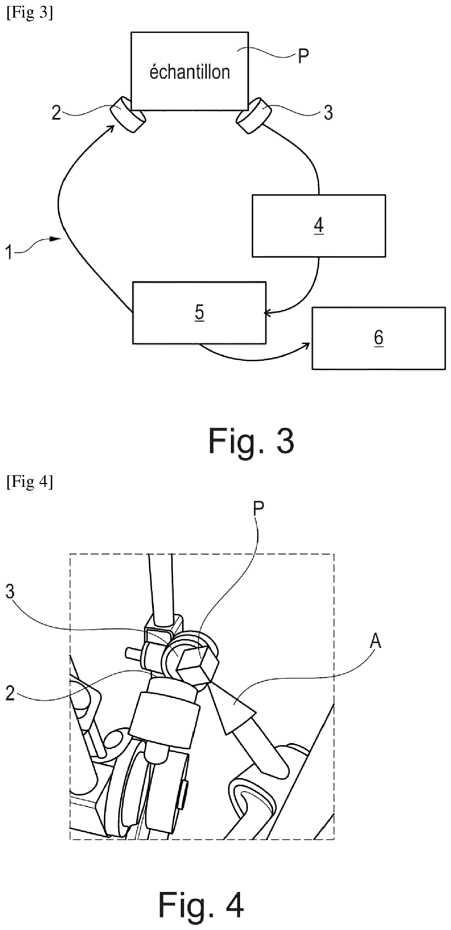

La figure 3 montre un système 1 de détection de fissures mis en œuvre selon l'invention.

Le système 1 comprend un émetteur à ultrasons 2 et un récepteur à ultrasons 3. Ces capteurs sont de préférence piézoélectriques.

Comme montré sur la figure 3, l'émetteur 2 et le récepteur 3 sont en contact direct avec une pièce P en alliage d'aluminium élaborée par fabrication additive à analyser. De préférence l'émetteur 2 et du récepteur 3 sont chacun en contact direct avec un coin de la pièce P. Comme montré en figure 4, notamment en fonction de la forme de la pièce P et/ou des capteurs 2, 3, on peut envisager un ou plusieurs appuis ponctuels A pour faciliter la mesure des signaux.

Un amplificateur 4 est relié au récepteur 3.

Un analyseur de spectres 5 est relié à la fois à l'émetteur 2 et de manière optionnelle à l'amplificateur 4 ou sinon au récepteur 3.

Enfin, une unité de traitement électronique 6, par exemple intégrée dans un ordinateur portable, est reliée à l'analyseur de spectres 5.

L'analyseur de spectres 5 permet de faire une mesure de la fonction de transfert des signaux en émission-réception.

Le procédé selon l'invention mis en œuvre par le système 1 est le suivant.

La fonction de transfert présente une série de pics qui sont caractéristiques des modes propres de vibration la pièce P, en fonction de sa géométrie, de son élasticité, de ses défauts internes Le réglage de l'analyseur de spectres est avantageusement fait en fonction des ordres de grandeur des fréquences de résonances connues de la pièce P afin d'observer au moins une fréquence de résonance.

Différentes méthodes existent pour estimer l'ordre de grandeur de la fréquence de résonance fondamentale.

Par exemple, pour déterminer un domaine de recherche de la fréquence fondamentale d'une pièce P en alliage d'aluminium, les inventeurs ont choisi de chercher le pic de résonance fondamental autour de la fréquence déterminée par la relation :

[Math 1] :

$$f_0 = \frac{c}{2l}$$

dans laquelle c est une estimation de la plus petite vitesse des ondes élastiques dans l'objet considéré et 1 une estimation de sa plus grande dimension.

A partir d'un spectre de pics enregistré, diverses quantités peuvent permettre de classer les pièces testées dans les catégories défectueuses ou saines, c'est-à-dire acceptables par rapport à des spécifications techniques en fonction des applications.

Le traitement des signaux réalisé par l'unité de traitement à partir de l'analyseur de spectres est le suivant.

Une extraction de pics de résonance est réalisée sur le signal préalablement soumis à un algorithme de seuillage. Il peut s'agir par exemple d'un seuillage à partir de portions du signal supérieures à un certain niveau d'amplitude, typiquement à l'aide de la fonction « *find_peaks* » : voir par exemple [5], [6].

Sur chacun des pics extraits à l'étape précédente, on détermine par une méthode de moindres carrés (« least square fit » en terminologie anglo-saxonne) les trois paramètres (fréquence centrale $\omega_0$, amplitude A, facteur de qualité Q) d'une fonction Lorentzienne donnée par la formule suivante :

[Math 2]:

$$X(\omega) = \frac{A}{\omega_0^2 - \omega^2 + \frac{j\omega\omega_0}{Q}}.$$

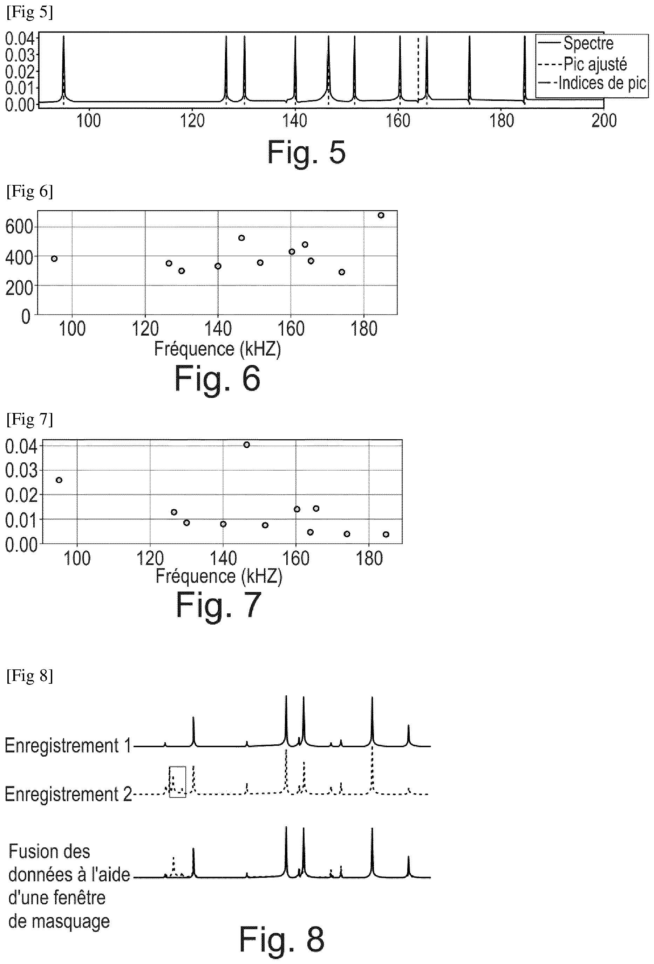

A titre d'exemple, on voit sur les figures 5 à 7, les données obtenues pour un spectre d'un échantillon en alliage d'aluminium fissuré.

Plus précisément, la figure 5 montre le spectre obtenu après extraction de pics (barres verticales sur le graphique), la figure 6 montre les facteurs de qualité Q ajustés sur la gamme de fréquences et la figure 7 montre l'amplitude des pics.

Il ressort de la figure 6 que les facteurs de qualité Q prennent des valeurs entre 200 et 700, qui sont indicatifs d'un échantillon fissuré pour le matériau en alliage d'aluminium évalué.

Il peut arriver que des fréquences de résonance soient invisibles dans le spectre mesuré. Ceci est dû au positionnement de l'échantillon sur les émetteur 2 et récepteur 3. Par précaution, les inventeurs pensent qu'il est préférable de faire plusieurs enregistrements du spectre afin de vérifier que le nombre de fréquences manquantes est faible. Dans le cas où une fréquence manquante a été identifiée, il est proposé de créer un nouveau spectre en combinant deux enregistrements et en fusionnant, à l'aide d'une fenêtre de masquage, les données des deux enregistrements. Cette procédure est illustrée sur la figure 8 à partir de deux enregistrements.

Les inventeurs ont réalisé différents tests avec des échantillons en alliages A1 6061 et 7075.

Pour ces échantillons, des facteurs de qualité Q inférieurs à une valeur de référence $Q_{ref}$ de 800 sont indicatifs d'échantillons fissurés, tandis que des facteurs de qualité Q supérieurs à cette valeur, en médiane, indiquent des échantillons sans présence de fissure.

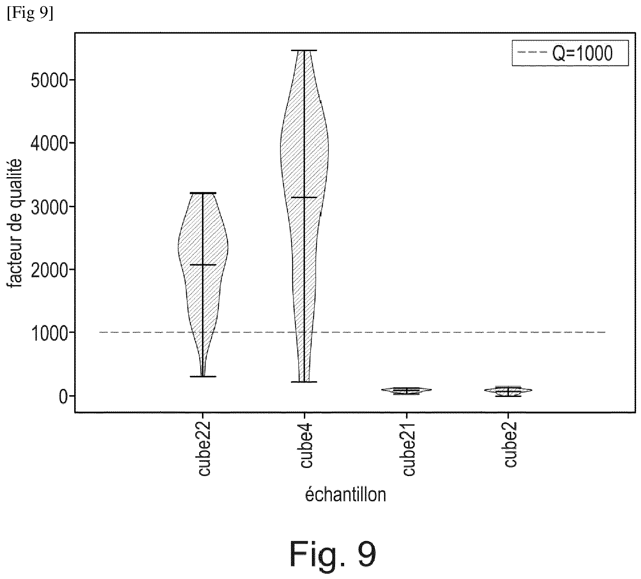

La figure 9 rend compte de cette observation montrant la distribution de facteurs de qualité pour quatre échantillons sous la forme de cubes en alliage Al 6061 dont deux sont dénués de fissures et les deux autres présentent des fissures. La médiane calculée des facteurs de qualité Q pour chaque cube est indiquée par la barre horizontale au centre des courbes en forme de « violon ».

Ainsi, sur cette figure 9, la médiane des facteurs de qualité obtenus est supérieure à la valeur de référence égale à 1000 pour les cubes 22 et 4 est inférieure à cette valeur pour les cubes 21 et 2. Et donc, selon la méthode de l'invention, les cubes référencés 22 et 4 sont sans fissures, alors que les cubes 21 et 2 sont fissurés, ce qui a été vérifié expérimentalement par métallographie. Il est également intéressant de signaler que le cube 22 n'est pas dense au sens de la mesure par poussée d'Archimède, avec une densité relative de l'ordre de 97%, ce qui confirme l'absence de corrélation entre les valeurs des facteurs de qualité et de densité.

En ce sens, la méthode selon l'invention est une méthode complémentaire à la mesure de densité, puisqu'une bonne pièce doit être à la fois dense et exempte de fissures. Par exemple, le cube 22 est exempt de fissures mais doit être rejeté du fait de sa une mauvaise densité, alors que le cube 21 doit être rejeté malgré sa bonne densité car il présente de nombreuses fissures.

L'invention n'est pas limitée aux exemples qui viennent d'être décrits; on peut notamment combiner entre elles des caractéristiques des exemples illustrés au sein de variantes non illustrées.

D'autres variantes et améliorations peuvent être envisagées sans pour autant sortir du cadre de l'invention.

Par exemple, si dans le système envisagé, tel qu'illustré, la mise en contact des émetteur-récepteur est réalisée sur des coins de la pièce à analyser, on peut aussi envisager d'autres localisations, voire rajouter des appuis ponctuels A comme montré en figure 4 pour faciliter la mesure.

**Liste des références citées:**

[1]: « Comparison of density measurement techniques for additive manufactured metallic parts», A.B. Spierings, M. Schneider, R. Eggenberger, Rapid Prototyping Journal 17/5 (2011) 380-386.

[2]: « Evaluation of defects in materials using resonant ultrasound spectroscopy », K. Flynn, M. Radovic, J. Mater. Sci. 46 (2011) 2548-2556.

[3]: « Crack detection and analyses using resonance ultrasonic vibrations in full-size crystalline silicon wafers », A. Belyaev, O. Polupan, W. Dallas, S. Ostapenko, D. Hess, J. Wohlgemuth, Appl. Phys. Lett. 88 (2006) 111907.

[4]: «A solution to the hot cracking problem for aluminium alloys manufactured by laser beam melting », M. Opprecht, J.P. Garandet, G. Roux, C. Flament, M. Soulier, Acta Materialia 197 (2020) 40-5.

[5]: https://docs.scipy.org/doc/scipy/reference/generated/scipy.signal.find_peaks.html

[6]: « Improved peak detection in mass spectrum by incorporating continuous wavelet transform-based pattern matching», P. Du, W. Kibbe and S. Lin, Vol. 22 no. 17 2006, pages 2059-2065 doi:10.1093/bioinformatics/btl355.

**Revendications**

1. Procédé de détection de fissures dans une pièce en alliage d'aluminium réalisée par une technique de fabrication additive, comprenant les étapes suivantes :

    a/ mise en contact d'un émetteur à ultrasons et d'un récepteur à ultrasons avec la pièce ;
    b/ émission de signaux de l'émetteur vers le récepteur à travers la pièce ;
    c/ mesure de la fonction de transfert de signaux entre émetteur et récepteur ;
    d/ à partir de la fonction de transfert mesurée, détermination d'un spectre à au moins un pic de fréquence de résonance ;
    e/ détermination du facteur de qualité (Q) pour chaque pic de fréquence de résonance ;
    f/ comparaison du facteur de qualité déterminé (Q) ou d'une médiane de facteurs de qualité déterminés avec un facteur de qualité de référence ($Q_{ref}$) correspondant à une pièce en alliage d'aluminium;
    g/ si le facteur de qualité déterminé ou la médiane de facteurs de qualité déterminés est supérieur(e) au facteur de qualité de référence ($Q_{ref}$), alors la pièce est estimée dénuée de fissures inacceptables.

2. Procédé selon la revendication 1, l'étape d/ consistant en la détermination du pic de la fréquence de résonance fondamentale de la pièce.

3. Procédé selon la revendication 1, l'étape d/ consistant en la détermination d'au moins 10 pics de résonance par un balayage en fréquence.

4. Procédé selon la revendication 2, le facteur de qualité de référence ($Q_{ref}$) étant au moins égal à 800, de préférence au moins égal à 1000.

**5.** Procédé selon la revendication 3, la médiane des facteurs de qualité mesurée sur l'ensemble des pics de résonnance étant au moins égale à 800, de préférence au moins égale à 1000

**6.** Procédé selon l'une des revendications 2 à 5, l'étape d/ étant réalisée par un algorithme de seuillage.

**7.** Procédé selon l'une des revendications précédentes, l'étape e/ consistant en l'ajustement du au moins un pic au moyen d'une fonction Lorentzienne.

**8.** Procédé selon l'une des revendications précédentes, l'étape b/ étant réitérée de sorte à déterminer au moins deux, préférentiellement au moins trois, encore plus préférentiellement au moins cinq spectres selon l'étape d/.

**9.** Procédé selon la revendication 7, comprenant avant l'étape e/, une étape d1/ de fusion des au moins deux spectres déterminés

**10.** Système (1) de détection de fissures dans une pièce en alliage d'aluminium réalisée par une technique de fabrication additive, comprenant :

- un émetteur à ultrasons (2) et un récepteur à ultrasons (3);
- un amplificateur (4) relié au récepteur ;
- un analyseur de spectres (5) relié à la fois à l'émetteur et au récepteur pour la mesure de la fonction de transfert entre l'émetteur et le récepteur;
- une unité de traitement électronique (6) reliée à l'analyseur de spectres, l'unité de traitement électronique étant configurée pour mettre en œuvre le procédé selon l'une des revendications 1 à 8.

**11.** Produit programme d'ordinateur pour la mise en œuvre du procédé selon l'une des revendications 1 à 8 lorsque ledit programme est exécuté sur un processeur/ordinateur.

**12.** Procédé de contrôle non destructif (CND) d'une pièce en alliage d'aluminium réalisée par une technique de fabrication additive, comprenant une étape de mesure de la densité de la pièce par une technique de mesure de la poussée d'Archimède avant ou après la réalisation du procédé selon l'une des revendications 1 à 8.

[Fig 1]

Fig. 1

[Fig 2]

Fig. 2

[Fig 3]

Fig. 3

[Fig 4]

Fig. 4

[Fig 5]

Fig. 5

[Fig 6]

Fréquence (kHZ)

Fig. 6

[Fig 7]

Fréquence (kHZ)

Fig. 7

[Fig 8]

Enregistrement 1

Enregistrement 2

Fusion des
données à l'aide
d'une fenêtre
de masquage

Fig. 8

[Fig 9]

Fig. 9

Europäisches
Patentamt

European
Patent Office

Office européen
des brevets

# RAPPORT DE RECHERCHE EUROPEENNE

Numéro de la demande

EP 22 15 9614

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/300993 A1 (PREST CHRISTOPHER D [US] ET AL) 22 octobre 2015 (2015-10-22) | 10 | INV.<br>G01N29/12 |
| Y | * abrégé *<br>* alinéas [0006], [0056], [0069] – [0078], [0081], [0085], [0090], [0091], [0096], [0097], [0100], [0103], [0105], [0106] * | 1-9,11, 12 | G01H3/00<br>G01N29/44<br>G01N29/46<br>B29C64/386<br>B33Y50/02<br>B29C64/393 |
| | ----- | | B22F10/85 |
| X | US 5 257 544 A (KHURI-YAKUB B T [US] ET AL) 2 novembre 1993 (1993-11-02) | 10 | |
| Y | * abrégé *<br>* colonne 1, lignes 39-41 *<br>* colonne 2, ligne 66 – colonne 3, ligne 27 *<br>* colonne 3, ligne 68 – colonne 4, ligne 6 *<br>* colonne 4, lignes 24-36 *<br>* colonne 5, lignes 3-4, 30-36; figure 5 * | 1,2,7, 11,12 | |
| | ----- | | |
| X | CN 111 024 819 A (UNIV FUDAN) 17 avril 2020 (2020-04-17) | 10 | DOMAINES TECHNIQUES RECHERCHES (IPC) |
| Y | * abrégé * | 1,2,7-12 | G01N |
| | ----- | | G01H |
| X | US 2014/102200 A1 (SINGH SURENDRA [US] ET AL) 17 avril 2014 (2014-04-17) | 10 | B33Y |
| Y | * abrégé *<br>* alinéas [0002], [0019] – [0023], [0028], [0029] * | 1-3,7-12 | B29C<br>C22C<br>B22F |
| | ----- | | |
| Y | US 2020/324483 A1 (CHAMBERS JANELLE KAY [US]) 15 octobre 2020 (2020-10-15)<br>* abrégé *<br>* alinéas [0001], [0045] – [0047], [0059], [0060], [0081], [0084], [0085], [0104], [0105], [0107], [0113], [0123] * | 1-12 | |
| | ----- | | |
| | -/-- | | |

Le présent rapport a été établi pour toutes les revendications

| Lieu de la recherche | Date d'achèvement de la recherche | Examinateur |
|---|---|---|
| Munich | 10 juin 2022 | Filipas, Alin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P04C02)

page 1 de 3

Europäisches
Patentamt

European
Patent Office

Office européen
des brevets

# RAPPORT DE RECHERCHE EUROPEENNE

Numéro de la demande

**EP 22 15 9614**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2020/108594 A1 (XU JINQUAN [US]) 9 avril 2020 (2020-04-09) * abrégé * * alinéas [0005], [0012], [0014], [0016] * ----- | 1-12 | |
| Y | US 2009/188320 A1 (GREENOUGH RODNEY DAVID [GB] ET AL) 30 juillet 2009 (2009-07-30) * abrégé * * revendications 1,9 * ----- | 1-3,8-12 | |
| Y | US 5 942 991 A (GAUDREAU MARCEL P J [US] ET AL) 24 août 1999 (1999-08-24) * colonne 1, lignes 58-63 * * colonne 2, lignes 11-26,35-63 * * colonne 4, lignes 32-35 * * colonne 4, ligne 66 – colonne 5, ligne 10; figure 1C * ----- | 1,2, 10-12 | |
| Y | HERNÁNDEZ-BECERRA P A I ET AL: "Comparison of Time-Domain and Frequency-Domain Contact Resonant Ultrasound Spectroscopy", INSTRUMENTS AND EXPERIMENTAL TECHNIQUES, CONSULTANTS BUREAU. NEW YORK, US, vol. 62, no. 2, 6 mai 2019 (2019-05-06), pages 241-246, XP036775101, ISSN: 0020-4412, DOI: 10.1134/S0020441219020118 [extrait le 2019-05-06] * page 241 * * page 245, colonne de gauche; tableau 1 * ----- -/-- | 7 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 10 juin 2022 | Filipas, Alin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

**EP 22 15 9614**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | A.B. SPIERINGS ET AL: "Comparison of density measurement techniques for additive manufactured metallic parts", RAPID PROTOTYPING JOURNAL, vol. 17, no. 5, 2 août 2011 (2011-08-02), pages 380-386, XP055495225, GB ISSN: 1355-2546, DOI: 10.1108/13552541111156504 * abrégé * ----- | 12 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 10 juin 2022 | Filipas, Alin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 3 de 3

## ANNEXE AU RAPPORT DE RECHERCHE EUROPEENNE
## RELATIF A LA DEMANDE DE BREVET EUROPEEN NO.

EP 22 15 9614

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-06-2022

| Document brevet cité au rapport de recherche | Date de publication | Membre(s) de la famille de brevet(s) | Date de publication |
|---|---|---|---|
| US 2015300993 A1 | 22-10-2015 | US 2015300993 A1<br>WO 2013162521 A1 | 22-10-2015<br>31-10-2013 |
| US 5257544 A | 02-11-1993 | AUCUN | |
| CN 111024819 A | 17-04-2020 | AUCUN | |
| US 2014102200 A1 | 17-04-2014 | AUCUN | |
| US 2020324483 A1 | 15-10-2020 | US 2020324483 A1<br>WO 2020210089 A1 | 15-10-2020<br>15-10-2020 |
| US 2020108594 A1 | 09-04-2020 | EP 3129772 A1<br>US 2017028703 A1<br>US 2020108594 A1<br>WO 2015157381 A1 | 15-02-2017<br>02-02-2017<br>09-04-2020<br>15-10-2015 |
| US 2009188320 A1 | 30-07-2009 | AT 543094 T<br>AU 2007280188 A1<br>EP 2052247 A1<br>GB 2440555 A<br>US 2009188320 A1<br>WO 2008015477 A1 | 15-02-2012<br>07-02-2008<br>29-04-2009<br>06-02-2008<br>30-07-2009<br>07-02-2008 |
| US 5942991 A | 24-08-1999 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A.B. SPIERINGS ; M. SCHNEIDER ; R. EGGEN-BERGER.** Comparison of density measurement techniques for additive manufactured metallic parts. *Rapid Prototyping Journal,* 2011, vol. 17/5, 380-386
- **K. FLYNN ; M. RADOVIC.** Evaluation of defects in materials using resonant ultrasound spectroscopy. *J. Mater. Sci.,* 2011, vol. 46, 2548-2556
- **A. BELYAEV ; O. POLUPAN ; W. DALLAS ; S. OSTAPENKO ; D. HESS ; J. WOHLGEMUTH.** Crack detection and analyses using resonance ultrasonic vibrations in full-size crystalline silicon wafers. *Appl. Phys. Lett.,* 2006, vol. 88, 111907
- **M. OPPRECHT ; J.P. GARANDET ; G. ROUX ; C. FLAMENT ; M. SOULIER.** A solution to the hot cracking problem for aluminium alloys manufactured by laser beam melting. *Acta Materialia,* 2020, vol. 197, 40-5
- **P. DU ; W. KIBBE ; S. LIN.** *Improved peak detection in mass spectrum by incorporating continuous wavelet transform-based pattern matching,* 2006, vol. 22 (17), 2059-2065